## Europäisches Patentamt

## European Patent Office

## Office européen des brevets

(19)

(11) Veröffentlichungsnummer: **0 035 766**
**B1**

(12) **EUROPÄISCHE PATENTSCHRIFT**

(45) Veröffentlichungstag der Patentschrift:
**02.11.88**

(51) Int. Cl.⁴: **G 02 F 1/19**

(21) Anmeldenummer: **81101614.6**

(22) Anmeldetag: **06.03.81**

(54) **Elektrochromer Spiegel.**

(30) Priorität: **07.03.80 DE 3008768**

(43) Veröffentlichungstag der Anmeldung:
**16.09.81 Patentblatt 81/37**

(45) Bekanntmachung des Hinweises auf die Patenterteilung:
**02.11.88 Patentblatt 88/44**

(84) Benannte Vertragsstaaten:
**FR GB IT SE**

(56) Entgegenhaltungen:
**DE-A-2 054 544**
**DE-A-2 160 101**
**DE-A-2 312 659**
**DE-A-2 356 105**
**DE-A-2 361 114**
**DE-A-2 549 912**
**DE-A-2 629 765**
**DE-A-2 644 528**
**DE-A-2 749 916**
**DE-A-2 944 993**
**US-A-3 521 941**
**US-A-3 712 710**
**US-A-3 844 636**

(73) Patentinhaber: **Schott Glaswerke,
Hattenbergstrasse 10, D-6500 Mainz (DE)**

(84) Benannte Vertragsstaaten: **FR GB IT SE**

(73) Patentinhaber: **CARL-ZEISS-STIFTUNG, Schott
Glaswerke Hattenbergstrasse 10, D-6500 Mainz 1
(DE)**

(84) Benannte Vertragsstaaten: **GB**

(72) Erfinder: **Baucke, Friedrich G.K., Kaiserstrasse 26,
D-6500 Mainz (DE)**
Erfinder: **Krause, Dieter, Orchideenweg 4, D-6500
Mainz 21 (DE)**
Erfinder: **Metz, Bernd, Westring 36, D-6500 Mainz
(DE)**
Erfinder: **Paquet, Volker, Kaiserstrasse 36, D-6500
Mainz (DE)**
Erfinder: **Zauner, Johannes, Elas-Brandström-
Strasse 33, D-6500 Mainz 23 (DE)**

(74) Vertreter: **Schmitz, Waldemar, Dipl.-Phys.,
Schmitz + Rasper Patentanwälte Lessingstrasse
10, D-6200 Wiesbaden (DE)**

**Beschreibung**

Die Erfindung betrifft einen elektrochromen Spiegel, gemäß dem Oberbegriff des Anspruchs 1. Ein darartiger elektrochromer Spiegel ist aus DE-A-2 356 105 bekannt.

Ein Material wird dann als elektrochrom bezeichnet, wenn es beim Anlegen eines elektrischen Feldes seine optischen Konstanten (n, k) ändert, nach Abschalten des Feldes diesen Zustand beibehält und nach Umpolen wieder in den Ausgangszustand zurückkehrt.

Typische Beispiele für solche elektrochrome Materialien sind $WO_3$ und $MoO_3$, die, in dünner Schicht auf einem Glasträger aufgebracht, farblos und durchsichtig sind. Wird jedoch an eine solche Schicht eine elektrische Spannung geeigneter Größe angelegt, dann wandern von der einen Seite geeignete Ionen, z. B. Protonen und von der anderen Seite Elektronen in diese Schicht und bilden die blaue Wolfram- oder Molybdänbronze $H_xWO_3$ bzw. $H_xMoO_3$. Die Intensität der Färbung wird bestimmt durch die in die Schicht eingeflossene Ladungsmege.

Man verwendet solche Schichten u.a. zur bewußten Abdunkelung von optischen Gläsern oder Spiegeln. Solche Spiegel sind z. B. beschrieben in der DE-A-2 361 114. Der Aufbau dieses bekannten Spiegels ist wie folgt:

Spiegelaufbau (in Blickrichtung):

| Glas | EG-Mat. | Metall-reflektor | flüss. Elektrolyt | Gegen-elektrode | transpa-rente 2. Elektrode | Glas |
|------|---------|------------------|-------------------|-----------------|----------------------------|------|
| 1 | 2 | 3 | 4 | 5 | 6 | 7 |

1 = Substrat für 2 und 3,
2 = aufgedampfte Schicht aus z. B. $WO_3$,
3 = aufgedampfte schicht aus z. B. Pd (1. Elektrode),
4 = flüssiger Elektrolyt als Leiter für die zwischen 5 und 2 fließenden Protonen.
5 = aufgesprühte Schicht aus z. B. Graphit oder Graphit + $WO_3$,
6 + 7 = mit $SnO_2$ beschichtetes Glas.

Dieser bekannte Spiegel hat folgende Wirkungsweise:

Die Gegenelektrode liefert die nötigen Wasserstoffionen. Wird an die Elektroden 3 und 6 eine schwache Spannung gelegt (6 positiv gepolt) , so wandern Wasserstoffionen aus 5 und Elektronen aus der Spannungsquelle in den Reflektor 3. Aus diesem diffundieren H-Atome in das EC-Material 2 und bilden - wenn das EC-Material z. B. $WO_3$ ist - die blaue Wolframbronze $H_xWO_3$, wobei $0 < x < 1$ ist und x die Färbungstiefe bestimmt.

Das Refexionsvermögen von 3 ist nun bei Betrachtung durch 1 und 2 herabgesetzt. Dieser Zustand bleibt erhalten, wenn die Spannung abgeschaltet wird.

Bei Umpolung der Spannung findet der umgekehrte Prozeß statt und die Schicht 2 wird wieder farblos. Dieser Bekannte Spiegel besitzt jedoch einige Nachteile:

1. Die verwendeten flüssigen Elektrolyte sind nicht im gesamten Temperaturbereich von -40 bis +80°C geeignet. Die Automobilindustrie die an einem Einsatz des EC-Spiegels als blendfreier Rückspiegel interessiert ist, fordert jedoch eine Funktionsfähigkeit im Bereich von -40 bis +80°C.

2. Zwischen dem flüssigen Elektrolyten und dem Reflektor bzw. der Gegenelektrode finden elektrochemische Reaktionen statt derart, daß der Elektrolyt den Reflektor oder die Gegenelektrode chemisch angreift.

3. Wegen der verschiedenen Arten der Verfahrensschritte (Aufdampf- und Sprühprozesse, Einfüllen von Flüssigkeit) ist das Herstellungsverfahren teuer.

4. Bei Bruch des Spiegels (Autounfall) besteht Verätzungsgefahr durch Verspritzen des (säurehaltigen) Elektrolyten.

Ein elektrochromer Spiegel, bei welchem die ionenleitende Schicht ein anorganischer Festkörper ist, ist bereits beschrieben in der US-A-3 712 710. Dieser hat folgenden Spiegelaufbau:

Schichtenfolge (in Blickrichtung):

| Glas | transpa-rente 2. Elektrode | EC-Material | fester Elektrolyt | Reflektor |
|------|----------------------------|-------------|-------------------|-----------|
| 1 | 2 | 3 | 4 | 5 |

1 = Substrat für 2, 3, 4 und 5,
2 = transparente SnO$_2$-Schicht,
3 = aufgedampfte Schicht aus z. B. WO$_3$,
4 = Schicht aus Alkalialuminat, durch Kathodenzerstäubung aufgebracht,
5 = aufgedampfte Schicht aus Alkalimetall (Me).

Dieser Spiegel hat folgende Hirkungsweise:
Wird an die Elektroden 2 und 5 (5 positiv gepolt) eine schwache Spannung gelegt, so wandern Alkali-Ionen aus 5 und Elektronen aus der Spannungsquelle in das EC-Material 3 und bilden - wenn, das EC-Material z. B. WO$_3$ ist - die blaue Wolframbronze Me$_x$WO$_3$, wobei $0 < x < 1$ ist und x die Färbungstiefe bestimmt.

Das Reflexionsvemögen von 5 ist nun bei Betrachtung durch 1, 2, 3 und 4 herabgesetzt. Dieser Zustand bleibt erhalten, wenn die Spannung abgeschaltet wird.

Bei Umpolung der Spannung findet der umgekehrte Prozeß statt und die Schicht 3 wird wieder farblos.

Dieser bekannte Spiegel besitzt jedoch folgende schwere Nachteile:

1. Da 3 und 5 aufgedampft werden und 4 kathodenzerstäubt wird, ist der Herstellungsprozeß aufwendig. Insbesondere die Schichtherstellung durch Kathodenzerstäubung ist sehr zeitaufwendig und erfordert zusätzlich eine (teure) Kathodenzerstäubungsanlage bzw. Kathodenzerstäubungseinrichtung, falls im gleichen Rezipienten gedampft und gesputtert wird.

2. Bei der Entfernung der Alkali-Ionen vom Reflektor und ihrer Rückführung zu diesem bilden sich Dendriten, die das Reflexionsvermögen von 5 herabsetzen, durch 4 hindurchwachsen und so einen Kurzschluß von 3 und 5 herbeiführen können.

3. Die Handhabung des Alkalimetalles und des fertigen, ungeschützten Systems muß in inerter Atmosphäre erfolgen, da sonst chemische Reaktionen stattfinden.

Ferner ist es aus der US-A-3 944 333 bei einem elektrochromen Display bekannt, ausschließlich eine feste wasserstoffionenleitende Schicht zu verwenden, die aus einem porösen organischen Festkörpermaterial besteht, dessen Poren mit verdünnter Schwefelsäure gefüllt sind.

Ziel der Erfindung ist ein neuartiger elektrochromer Spiegel, der diese geschilderten Nachteile nicht aufweist. Dieses Ziel wird mit einem Spiegel gemäß den Patentansprüchen erreicht.

Nachfolgend werden einige gemäß Ausführungsbeispielen der Erfindung mögliche Anordnungen für elektrochrome Spiegel wiedergegeben. Ein erfindungsgemäßer elektrochromer Spiegel kann z. B. folgenden Aufbau (in Blickrichtung) aufweisen:

**Beispiel 1**

1 - ein Glassubstrat,
2 - eine transparente Elektrode,
3 - eine elektrochrome Schicht,
4 - eine feste ionenleitende Schicht,
5 - ein wasserstoffionendurchlässiger Reflektor,
6 - eine feste ionenleitende Schicht,
7 - eine ionenspeichernde Schicht,
8 - eine katalytische Schicht, die gleichzeitig Elektrode ist,
9 - ein Kleber und
10 - eine Abschlußscheibe.

**Beispiel 2**

1 - ein Glassubstrat,
2 - eine transparente Elektrode,
3 - eine elektrochrome Schicht,
4 - eine feste ionenleitende Schicht,
5 - ein wasserstoffionendurchläsiger Reflektor, der zugleich Elektrode ist,
7 - eine ionenspeichernde Schicht,
8 - eine katalytische Schicht,
9 - ein Kleber und
10 - eine Abschlußscheibe.

**Beispiel 3**

1 - ein Glassubstrat,
2 - eine transparente Elektrode,
3 - eine elektrochrome Schicht,
4 - eine feste ionenleitende Schicht,
5 - ein wasserstoffionendurchlässiger Reflektor,
7 - eine ionenspeichernde Schicht,
8 - eine katalytische Schicht, die gleichzeitig Elektrode ist,
9 - ein Kleber und
10 - eine Abschlußscheibe.

**Beispiel 4**

1 - ein Glassubstrat,
3 - eine elektrochrome Schicht,
5 - ein wasserstoffionendurchlässiger Reflektor, der zugleich Elektrode ist,
4 - eine feste ionenleitende Schicht,
7 - eine ionenspeichernde Schicht,
8 - eine katalytische Schicht, die gleichzeitig Elektrode ist,
9 - ein Kleber,
10 - eine Abschlußscheibe.

**Beispiel 5**

1 - ein Glassubstrat
2 - eine transparente Elektrode,
3 - eine elektrochrome Schicht,
4 - eine feste ionenleitende Schicht,
5 - ein wasserstoffionendurchlässiger Reflektor, der zugleich Elektrode ist,
7 - eine ionenspeichernde Schicht,
6 - eine feste ionenleitende Schicht,
11 - eine wasserdampfdurchlässige Elektrode,
9 - ein Kleber,
10 - eine Abschlußscheibe.

Elektrochrome Spiegel gemäß den vorstehenden Ausführungsbeispielen sind Dünnschichtakkumulatoren, die aufgeladen sind, wenn der Wasserstoffionengehalt der wasserstoffspeichernden Schicht (7) größer ist als der der EC-Schicht (3) oder umgekehrt. Die maximale Spannung eines aufgeladenen Akkumulators dieses Typs beträgt bei Verwendung von Wasserstoffionen etwa 0,5 V; negativ ist die Elektrode, die der wasserstoffionenhaltigen Schicht benachbart ist. Soll das vom Reflektor reflektierte Licht geschwächt werden, wird an die Elektrode, die der EC-Schicht benachbart ist, eine negative Spannung von mindestens 0,5 V gelegt. Wasserstoff ionen wandern nun aus der ionenspeichernden Schicht durch das Schichtsystem in die EC-Schicht und bilden dort die lichtabsorbierende Verbindung $H_xWO_3$ (Wolframbronze). Dieser Vorgang läuft umso schneller ab, je höher die Spannung gewählt wird; sie sollte jedoch nicht wesentlich über 5 V liegen, damit Kurzschlüsse durch elektrische Durchbrüche vermieden werden.

Bei konstanter $WO_3$-Schichtdicke ist der Grad der Schwächung durch die Größe x in $H_xWO_3$ festgelegt. Durch Dosierung der in die $WO_3$-Schicht fließenden Ladung ist eine Einstellung des gewünschten Schwächungsgrades leicht möglich.

Es ist empfehlenswert, die äußere Oberfläche des Substrats zu entspiegeln, um den konstanten Reflexionsanteil zu vermindern, der 4 % bei einem Substratglas mit einem Brechungs index von z. B. 1,5 betragt. Ebenfalls kann, um den Reflexionsanteil der Grenzfläche Substrat/transparente Elektrode zu unterdrücken, vor dieser eine Schicht mit einem Brechungsindex n aufgebracht werden, der den Wert

$$\sqrt{n_{TE} \cdot n_{Substrat}}$$ besitzt;

$n_{TE}$ (= Berechungsindex der transparenten Elektrode) liegt bei den üblicherweise verwendeten Materialien $SnO_2$ oder $SnO_2$-dotiertes $In_2O_3$ bei etwa 2,0. Geeignete schichtmaterialien mit dem geforderten n sind $Al_2O_3$ und $CeF_3$. Die Lichttransmission im sichtbaren Spektralgebiet der transparenten Elektrode sollte nicht unter 80 %, ihr Flächenwiderstand nicht über 10 $\Omega/\square$ liegen. Schichten mit diesen Eigenschaften können nach dem Stand der Technik z. B. durch Aufdampfen, Kathodenzerstäubung und CVD hergestellt werden.

Die elektrochrome (EC-)Schicht kann aus $WO_3$, $MoO_3$, $IrO_2$ $WO_3$-$MoO_3$ - und $WO_3$-$MoO_3$-$M_2O$-Mischungen (M = Alkalimetall) oder aus einem $WO_3$-Glas bestehen. Um einen Schwächungsfaktor $f \leqslant 0,01$ zu erhalten, der definiert werden kann als das Verhältnis von reflektierter Lichtintensität im gefärbten zu reflektierter Lichtintensität im aufgehellten Zustand, sollte die EC-Schicht nicht dünner sein als 100 nm. Eine obere Grenze von 2 - 5 μm ist durch mechanische Spannungen gesetzt, die mit der Schichtdicke wachsen.

Die Wasserstofionenleitung in den "Festkörper-Ionenleiter"-Schichten (F.I.-Schichten) wird überwiegend durch eingebautes Wasser ermöglicht. Der Wassereinbau kann durch Aufrechterhaltung eines Wasserdampfpartialdruckes während der Aufbringung der F.I.-Schicht oder durch Lagerung des fertigen EG-Systems in wasserdampfhaltiger Atmosphäre erfolgen. In beiden Fällen besitzt die F.I.-Schicht eine poröse Struktur, die sich z. B. beim Aufdampfen mit hoher Rate (z. B. 5 nm/s für $SiO_2$) oder unter erhöhtem Gasdruck (z. B. $5 \cdot 10^{-4}$ mbar Ar) einstellt.

Die F.I.-Schicht sollte mindestens so dick sein, daß ein Durchtunneln von Elektronen unwahrscheinlich wird ($d \geqslant 15$ nm). Nach oben begrenzen mechanische Spannungen und erhöhter Wasserstoff-Ionenwiderstand die Dicke, so daß d-Werte größer als 5 μm ungünstig werden. Ist der Farbort eines Reflexionsspektrums vorgegeben oder muß im interessierenden Spektralbereich im aufgehellten Zustand das Reflexionsvermögen des EC-Spiegels möglichst hoch sein, dann sind die Dicken der EC- und F.I.-Schicht nicht mehr unabhängig voneinander wählbar, sondern interferenzoptisch miteinander verknüpft.

Besitzen Materialien möglichst geringe Elektronenleitfähigkeit, die Fähigkeit Wasserdampf anzulagern, geringe Lichtabsorption im interessierenden Spektralbereich, und sind sie spritzerarm und praktisch ohne Zersetzung verdampfbar, sind sie zur Herstellung von F.I.-Schichten für Wasserstoffionen geeignet. Solche Materialien sind z. B. die Oxide des Si, Zr, B, Nd, La, Gemische dieser Oxide und Aufdampfgläser, außerdem die Fluoride des Mg, Ce, La, Nd, Y, Ca, Na, Li, Th und Mischungen dieser Fluoride untereinander (z. B. Kryolith) und mit den genannten Oxiden.

Zur Herstellung des Reflektors sind die Metalle geeignet, die eine hohe Durchlässigkeit für Wasserstoffionen aufweisen, z. B. Pd, Pt, Rh und Pd-Ag- Legierungen. Eine Schichtdicke von etwa 50 nm ist ausreichend; dann hat der Reflektor praktisch das Reflexionsvermögen des massiven Metalls. Wegen der schlechten Haftfestigkeit dieser Metalle zu oxidischen und fluoridischen Schichten empfiehlt es sich, die Reflektorschicht in dünne, optisch noch nicht in Erscheinung tretende Haftvermittlerschichten einzupacken. Bewährt hat sich Ti.

Hat der Reflektor nicht gleichzeitig die Funktion einer Elektrode, dann braucht er nicht elektronenleitend, sondern kann ein dielektrischer Spiegel sein, bestehend aus $\frac{\lambda}{4 \cdot n}$ dicken ionenleitenden Schichten aus abwechselnd hoch- und niedrigbrechendem Dielektrikum, wobei n der Brechungsindex des hoch-oder niedrigbrechenden Dielektrikums und λ die zentrale Wellenlänge des hochreflektierenden Spektralbereichs ist. Dieser Typ Spiegel ist besonders vorteilhaft, da er mit wenigen (4 - 5) Schichtpaarer schon ein Reflexionsvermögen von mehr als 90 % besitzt im Gegensatz zu Pd mit etwa 65 % bei einer Wellenlänge von 550 nm.

Geeignete Materialien für die niedrigbrechenden Schichten und die färbenden Wasserstoffionen sind $SiO_2$, $MgF_2$, $ThF_4$, Kryolith und für die hochbrechenden $WO_3$, $MoO_3$, $WO_3$-$MoO_3$- und $WO_3$-$MoO_3$-$M_2O$-Mischungen (M = Alkalimetall), $WO_3$-Glas, $ZrO_2$.

Bewährt hat es sich, die ionenspeichernde Schicht aus gleichem Material und mindestens so dick herzustellen wie die EC-Schicht; letztere Eigenschaft beeinflußt positiv die Färb- und Bleichgeschwindigkeit des Spiegels.

Zum Einbau der färbenden Wasserstoffionen in die Speicherschicht durch eine Behandlung des Spiegels in wasserstoffhaltiger Atmosphäre sollte als letzte Schicht eine Schicht mit katalytischenn Eigenschaften aufgebracht werden.

Die katalytische Schicht und die katalytische Elektrode sind Schichten aus geeignetem Metall, die molekularen Wasserstoff aus wasserstoffhaltiger Atmosphäre aufnehmen und in atomaren Wasserstoff zerlegen können. Die angrenzende Schicht ist imstande, atomaren Wasserstoff auf zunehmen und Wasserstoffionen zu leiten. Da die Speicherfähigkeit vom äußeren Wasserstoffpartialdruck abhängt, kann mit diesem bequem der Wasserstoffeinbau gesteuert werden.

Geeignete katalytische Metalle sind z. B. Pd, Pt, Rh, Ni, $La_2Ni_5$, FeTi. Die katalytische Schicht kann sehr dünn sein; so reicht bei Pd schon eine Dicke von 1 nm völlig aus, um die gewünschte Wirkung zu erzielen. Soll sie gleichzeitig noch als Elektrode dienen, ist für eine ausreichende Elektronenleitfähigkeit eine Mindestdicke von etwa 10 nm erforderlich.

Die Abschlußscheibe kann aus Glas, Metall oder Kunststoff bestehen; ein Epoxidkleber z. B. gewährleistet eine gegen Materieaustausch mit der Außenwelt ausreichend dichte Versiegelung des Systems; jedoch sind auch niedrigschmelzende Metallote verwendbar. Muß die Versiegelung besonders widerstandsfähig gegenüber mechanischer Beanspruchung sein, dann ist es zweckmäßig, mit dem Kleber oder dem Lot eine Abschlußscheibe aufzubringen, die aus Glas, Kunststoff oder Metall bestehen kann. Die in den weiter oben aufgeführten Ausführungsbeispielen beschriebenen Spiegeltypen weisen verschiedene Vorteile bei der Herstellung oder im Betrieb auf. Beispielsweise ist ein Spiegel gemäß Beispiel 5 kaum anfällig gegenüber Spritzern oder Staubablagerung während der Beschichtung und kann unter Nicht-Reinraum-Bedingungen hergestellt werden. Diese Eigenschaft verdankt er der zweiten Ionenleiterschicht.

Einige der beschriebenen Spiegel besitzen wegen der geringen Schichtenzahl eine etwas bessere mechanische Stabilität. Vorteilhaft ist auch daß u. U. auf die relativ teure transparente Elektrode verzichtet werden kann.

Der Einbau von Wasserstoff von außen in die ionenspeichernde Schicht erfolgt bei dem Spiegel nach Beispiel 5 durch eine Elektrolyse des aus der Atmosphäre durch 11 in 6 diffundierenden Wasserdampfes, wenn an 5 und 11 eine Spannung von etwa 2 V gelegt wird (11 positiv gepolt).

Der Spiegel enthält nun den zum Betrieb erforderlichen Wasserstoff und wird über die Elektroden 2 und 5 betrieben.

Die ionenspeichernden Schichten der Spiegel nach den Beispielen 1 bis 4 werden dadurch mit Wasserstoff beladen, daß die ionenspeichernde Schicht mit z. B. verdünnter $H_2SO_4$ bedeckt und an einer beliebigen Stelle mit einem Indium-Draht berührt wird. Der Mechanismus dieses Vorgangs ist beschrieben von R. S. Crandall und B.W. Faughnan in Appl. Phys. Lett. <u>26</u>, 120 - 21 (1975).

**Patentansprüche**

1. Elektrochromer, in Bezug auf Stoffaustausch mit der Umwelt abgeschlossener Spiegel, bestehend aus mindestens zwei Elektroden, mindestens einer elektrochromen Schicht, einem wasserstoffionendurchlässigen Reflektor, mindestens einer festen wasserstoffionenleitenden Schicht aus einem porösen anorganischen Festkörpermaterial mit einer möglichst geringen Elektronenleitfähigkeit, dessen Poren ein wasserstoffionenleitendes Medium aufweisen, und aus mindestens einer wasserstoffionenliefernden Schicht, die zugleich eine wasserstoffionenspeichernde Schicht und nicht identisch mit dem Reflektor ist, dadurch gekennzeichnet, daß der über den Reflektor verlaufende Ionenkontakt zwischen wasserstoffionenliefernder Schicht und der einzufärbenden elektrochromen Schicht ausschließlich durch die feste wasserstoffionenleitende Schicht bzw. Schichten erfolgt, und daß die Wasserstoffionenleitung in der bzw. den festen wasserstoffionenleitenden Schicht bzw. Schichten überwiegend durch eingebautes Wasser ermöglicht ist, das am Festkörpermaterial angelagert ist.

2. Elektrochromer Spiegel nach Anspruch 1, dadurch gekennzeichnet, daß der Reflektor eine dielektrische Schicht ist.

3. Elektrochromer Spiegel nach Anspruch 1, dadurch gekennzeichnet, daß der Reflektor eine metallische Schicht ist.

4. Elektrochromer Spiegel nach Anspruch 3, dadurch gekennzeichnet, daß dieser Reflektor eine Schicht aus Ruthenium, Rhodium, Palladium, Osmium, Iridium, Platin oder aus einem Gemisch dieser Metalle ist.

5. Elektrochromer Spiegel nach einem der Ansprüche 1 bis 4, dadurch gekennzeichnet, daß die Elektroden und die Schichten auf ein Glassubstrat aufgebracht sind und daß auf die letztaufgebrachte Schicht eine Abschlußplatte geklebt ist.

6. Elektrochromer Spiegel nach Anspruch 5, dadurch gekennzeichnet, daß das Festkörpermaterial der wasserstoffionenleitenden Schicht bzw. Schichten durch Aufdampfen aufgebracht ist.

7. Elektrochromer Spiegel nach einem der Ansprüche 1 bis 6, dadurch gekennzeichnet, daß die wasserstoffliefernde Schicht zugleich eine elektrochrome Schicht ist.

8. Elektrochromer Spiegel nach einem der Ansprüche 1 bis 7, dadurch gekennzeichnet, daß die feste bzw. festen wasserstoffionenleitende(n) Schicht bzw. Schichten Oxide von Silizium, Zirkonium, Titan oder Gemische solcher Oxide enthält bzw. enthalten.

9. Elektrochromer Spiegel nach einem der Ansprüche 1 bis 7, dadurch gekennzeichnet, daß die feste bzw. festen wasserstoffionenleitende(n) Schicht bzw. Schichten Fluoride der Elemente der Gruppen II A oder III B des periodischen Systems der Elemente enthält bzw. enthalten.

10. Elektrochromer Spiegel nach einem der Ansprüche 1 bis 9, dadurch gekennzeichnet, daß er zusätzlich eine katalytische Schicht enthält, welche bei der Herstellung des Spiegels die Versorgung der angrenzenden ionenspeichernden Schicht mit Wasserstoff ermöglicht.

**Claims**

1. Electrochromic mirror, isolated in respect of material exchange with the outer world, comprising at least two electrodes, at least one electrochromic layer, a reflector impermeable to hydrogen ions, at least one solid hydrogen ion-conducting layer consisting of a porous inorganic solid-state material having an electron conductivity as low as possible the pores of which have a hydrogen ion-conducting medium, and at least one hydrogen ion-producing layer being both a hydrogen ion-accumulating layer and not identical with the reflector, characterized in that the ion contact being achieved by the reflector between the hydrogen ion-producing layer and the electrochromic layer to be dyed solely take(s) place by the solid hydrogen ion-conducting layer(s) and that the hydrogen ion-conduction is enabled in the solid hydrogen ion-conducting layer(s) mainly by means of incorporated water, which is added on the solid-state material.

2. Electrochromic mirror according to claim 1, characterized in that the reflector is a dielectric layer.

3. Electrochromic mirror according to claim 1, characterized in that the reflector is a metallic layer.

4. Electrochromic mirror according to claim 3, characterized in that this reflector is a layer of ruthenium, rhodium, palladium, osmium, iridium, platinum or of a mixture of these metals.

5. Electrochromic mirror according to one of the claims 1 to 4, characterized in that the electrodes and the layers are deposited on a glass substrate and that a coverplate is glued on the last deposited layer.

6. Electrochromic mirror according to claim 5, characterized in that the solid-state material of the hydrogen ion-conducting layer is deposited by evaporation.

7. Electrochromic mirror according to one of the claims 1 to 6, characterized in that the hydrogen producing layer is an electrochromic layer, too.

8. Electrochromic mirror according to one of the claims 1 to 7, characterized in that the solid hydrogen conducting layer(s) comprise(s) oxides of silicon, zirconium, titanium or mixtures of such oxides.

9. Electrochromic mirrors according to one of the claims 1 to 7, characterized in that the solid hydrogen conducting layer(s) comprise(s) fluorides of the elements of the groups 2a or 3b of the periodical table of the elements.

10. Electrochromic mirror according to one of the claims 1 to 9, characterized in that it additionally comprises a catalytic layer which enables the supply of the adjacent ion accumulating layer with hydrogen during the manufacture of the mirror.


**Revendications**

1. Miroir électrochromique étant scellé en ce qui concerne le transfert de matière avec l'environnement, se composant au moins de deux électrodes, au moins d'un enduit électrocnromique d'un réflecteur perméable aux ions d'hydrogène, au moins d'un enduit solide conduisant les ions d'hydrogène et se composant d'une matière inorganique et poreuse de solide et d'une conductibilité d'électrons aussi basse que possible, dont les pores montrent un milieu conduisant les ions d'hydrogène, et au moins d'un enduit fournissant des ions d'hydrogène, lequel est également un enduit accumulant les ions d'hydrogène et pas identique au réflecteur, caractérisé par le fait, que le contact ionique, qui se produit au moyen du réflecteur entre l'enduit fournissant des ions d'hydrogène et l'enduit électrochromique pour être coloré, a lieu exclusivement au moyen de l'enduit solide ou selon le cas des enduits solides conduisant les ions d'hydrogène, et que la conduite des ions d'hydrogène dans l'enduit solide ou selon le cas dans les enduits solides conduisant les ions d'hydrogène est principalement rendu possible par de l'eau incorporée, laquelle est fixée à la matière solide.

2. Miroir électrochromique suivant la revendication 1 caractérisé par le fait, que le réflecteur est un enduit diélectrique.

3. Miroir électrochromique suivant la revendication 1 caractérisé par le fait, que le réflecteur est un enduit métallique.

4. Miroir électrochromique suivant la revendication 3 caractérisé par le fait, que ce réflecteur est un enduit de ruthenium, rhodium, palladium, osmium, iridium, platine ou un mélange de ces métaux.

5. Miroir électrochromique suivant une des revendications 1 à 4 caractérisé par le fait, que les électrodes et les enduits sont appliqués sur un substrat de verre et que l'enduit le dernier appliqué est recouvri d'une plaque terminale.

6. Miroir électrochromique suivant la revendication 5 caractérisé par le fait, que la matière solide de l'enduit ou selon le cas des enduits conduisant les ions d' hydrogène est appliquée par évaporisation.

7. Miroir électrochromique suivant une des revendications 1 à 6 caractérisé par le fait que l'enduit fournissant l'hydrogène est également un enduit électrochromique.

8. Miroir électrochromique suivant une des revendications 1 à 7 caractérisé par le fait que l'enduit solide ou selon le cas les enduits solides conduisant les ions d'hydrogène comprend ou selon le cas comprennent des oxides de silicium, zirconium, titane ou des mélanges de tels oxides.

9. Miroir électrochromique suivant une des revendications 1 à 7 caractérisé par le fait, que l'enduit solide ou selon le cas les enduits solides conduisant les ions d'hydrogène comprend ou selon le cas comprennent des fluorures des éléments des groupes II A ou III B de la classification périodique des éléments.

10. Miroir électrochromique suivant une des revendications 1 à 9 caractérisé par le fait, qu'il comprend un enduit catalytique supplémentaire, lequel permet l'alimentation de l'enduit adjacent et accumulant des ions en hydrogène pendant la fabrication du miroir.